## Europäisches Patentamt

## European Patent Office

## Office européen des brevets

(19)

(11) Veröffentlichungsnummer: **0 175 987**
**B1**

(12)

# EUROPÄISCHE PATENTSCHRIFT

(45) Veröffentlichungstag der Patentschrift:
**14.09.88**

(21) Anmeldenummer: **85111327.4**

(22) Anmeldetag: **07.09.85**

(51) Int. Cl.⁴: **B 66 C 1/02,** B 66 C 13/08,
B 65 H 3/08, B 65 H 5/08

(54) **Vorrichtung zum Halten von plattenförmigen Körpern in definierter Lage.**

(30) Priorität: **25.09.84 DE 3435144**

(43) Veröffentlichungstag der Anmeldung:
**02.04.86 Patentblatt 86/14**

(45) Bekanntmachung des Hinweises auf die Patenterteilung:
**14.09.88 Patentblatt 88/37**

(84) Benannte Vertragsstaaten:
**AT BE CH FR GB LI NL SE**

(56) Entgegenhaltungen:
**DE - A - 3 025 201**
**DE - C - 413 160**
**US - A - 2 925 300**

**Prospekt "Verglasungs-Gehänge 8/82", Fa. Pannkoke GmbH, Händelweg 5, D-2400 Lübeck 1**

(73) Patentinhaber: **HEGLA Fahrzeug- u. Maschinenbau GmbH & Co. KG, Industriestrasse 21, D-3472 Beverungen (DE)**

(72) Erfinder: **Hahn, Thomas, Hanauer Landstrasse 211, D-6000 Frankfurt/Main 1 (DE)**

(74) Vertreter: **Reichel, Wolfgang, Dipl.-Ing. et al, Reichel und Reichel Parkstrasse 13, D-6000 Frankfurt am Main 1 (DE)**

ACTORUM AG

## Beschreibung

Die Erfindung betrifft eine Vorrichtung nach dem Oberbegriff des Anspruchs 1. Derartige Vorrichtungen werden beispielsweise bei der Verarbeitung und Behandlung von Glasscheiben und insbesondere auch bei der Montage von Glasscheiben auf Baustellen benutzt. Die Saugeinrichtung dient dabei zum Halten der Glasscheibe, die sich dann mit Hilfe einer Hebevorrichtung, beispielsweise eines Krans, an den vorgesehenen Ort transportieren lässt.

Die Saugeinrichtung weist in der Regel mehrere Saugköpfe auf, die an einer Traverse nebeneinander in einer Reihe angebracht sind. Die Einrichtung zum vertikalen Heben und Senken ist dabei an der Traverse befestigt. Da der Einbau der Glasscheiben in den meisten Fällen in senkrechter Lage erfolgt, wird die Saugeinrichtung an der Glasscheibe in der oberen Hälfte mittig angesetzt. Bei dieser Halterung kann die Glasscheibe wegen der ungünstigen Schwerpunktlage niemals eine senkrechte oder fast senkrechte Lage einnehmen. Besonders bei der Montage von sehr grossen Glasscheiben treten Schwierigkeiten auf, wenn die mit dem Kran herangebrachte, nicht senkrecht hängende Scheibe in eine senkrechte Montagelage gebracht werden muss.

Es ist bereits eine Vorrichtung der eingangs erwähnten Art bekannt (DE-U 1 973 589), bei der die an der Saugeinrichtung angebrachte Kippeinrichtung Kurvenbahnen aufweist, auf denen am Ende der auf Zug beanspruchbaren Einrichtung vorgesehene Rollen gleiten. Die Saugeinrichtung mit dem angehängten plattenförmigen Körper ist aufgrund der Form der Kurvenbahnen zwischen zwei Endstellungen verschwenkbar, wobei sich der plattenförmige Körper entweder in einer nahezu senkrechten oder einer waagerechten Stellung befindet. Eine vollständig senkrechte Stellung ist nicht erreichbar, da der Schwerpunkt des Gebildes aus Saugeinrichtung und plattenförmigem Körper in den beiden Endstellungen nicht unter der auf Zug beanspruchbaren Einrichtung liegt. Andererseits ist die Saugeinrichtung mit dem angehängten plattenförmigen Körper nur in den beiden Endstellungen stabil aufgehängt. In allen Zwischenlagen bleibt die Saugeinrichtung mit dem von ihr gehaltenen plattenförmigen Körper nicht stabil stehen.

Es ist ferner eine Vorrichtung bekannt (DE-PS 413 160) mit der sich auch ein plattenförmiger Körper aus einer geneigten Lage in eine nahezu senkrechte Lage bringen lässt; jedoch wird auch mit dieser Vorrichtung niemals eine senkrechte Lage des plattenförmigen Körpers erreicht werden können, da der Anschlusspunkt des die Saugeinrichtung halternden Seils senkrecht über dem Schwerpunkt der Saugeinrichtung selbst liegt, jedoch nicht über dem Gebilde, das aus der Saugeinrichtung und dem daran angehängten plattenförmigen Körper besteht.

Nach einer anderen bekannten Vorrichtung ist die Veränderung der Lage einer an einer Saugeinrichtung hängenden Glasscheibe durch Veränderung des Anschlusspunkts an dem Sauggerät bereits bekannt. So wird in der Druckschrift «Verglasungs-Gehänge (8/82)» der Firma Pannkoke Flachglastechnik GmbH, Hendelweg 5, 2400 Lübeck 1, ein Sauggerät beschrieben, welches zum Aufrichten bzw. Niederlegen von Glasplatten im Winkel von 90° dient. Hierbei ist der Anschlusspunkt am Sauggerät parallel zur Ansaugebene in der Heberichtung pneumatisch verschiebbar. Eine senkrechte Lage kann die Glasscheibe bei dieser bekannten Vorrichtung auch nicht einnehmen.

Der Erfindung liegt die Aufgabe zugrunde, eine Vorrichtung der eingangs erwähnten Art anzugeben, mit deren Hilfe ein plattenförmiger Körper senkrecht gehalten werden kann, auch wenn sich das freie Ende des Auslegers unterhalb des oberen Randes des plattenförmigen Körpers befindet.

Diese Aufgabe wird gelöst durch eine Vorrichtung mit den Merkmalen des kennzeichnenden Teils des Anspruchs 1.

Die Verstelleinrichtung ermöglicht die Änderung des Anschlusspunktes, bis er sich über dem Schwerpunkt der Kombination der Anordnung mit dem plattenförmigen Körper befindet, und damit auch eine Einstellung der Lage des plattenförmigen Körpers in die Senkrechte.

Da die Vorrichtung so ausgebildet ist, dass der Anschlusspunkt der Saugeinrichtung bis an die Ansaugebene heran bewegbar ist, lassen sich plattenförmige Körper verschiedener Grösse und auch verschiedenen Gewichts in die senkrechte Lage bringen.

Vorzugsweise kann auf der der Ansaugebene entgegengesetzten Seite der Saugeinrichtung ein Gegengewicht angebracht sein. Das Gegengewicht dient dabei zusätzlich zur Veränderung der Schwerpunktlage.

Eine andere Weiterbildung der Erfindung besteht darin, dass die Einrichtung zum vertikalen Heben und Senken, beispielsweise die Seilrolle, mit dem Seil den äussersten Teil des Auslegers bildet. Bei einer derartigen Ausgestaltung des Auslegers ist es möglich, den plattenförmigen Körper mit der Hebevorrichtung so weit anzuheben, dass die Oberkante des plattenförmigen Körpers über den Ausleger hinaus ragt. Hierdurch wird es möglich, den plattenförmigen Körper, insbesondere eine Glasscheibe, auch unter Vorsprüngen und durch Öffnungen hindurch zu transportieren.

Weitere Vorteile ergeben sich aus den Unteransprüchen.

Die Erfindung wird anhand eines Ausführungsbeispiels näher erläutert, welches in der Zeichnung dargestellt ist. Es zeigt:

Fig. 1 die Seitenansicht des Auslegers und der Saugeinrichtung; und

Fig. 2 die Draufsicht des Auslegers.

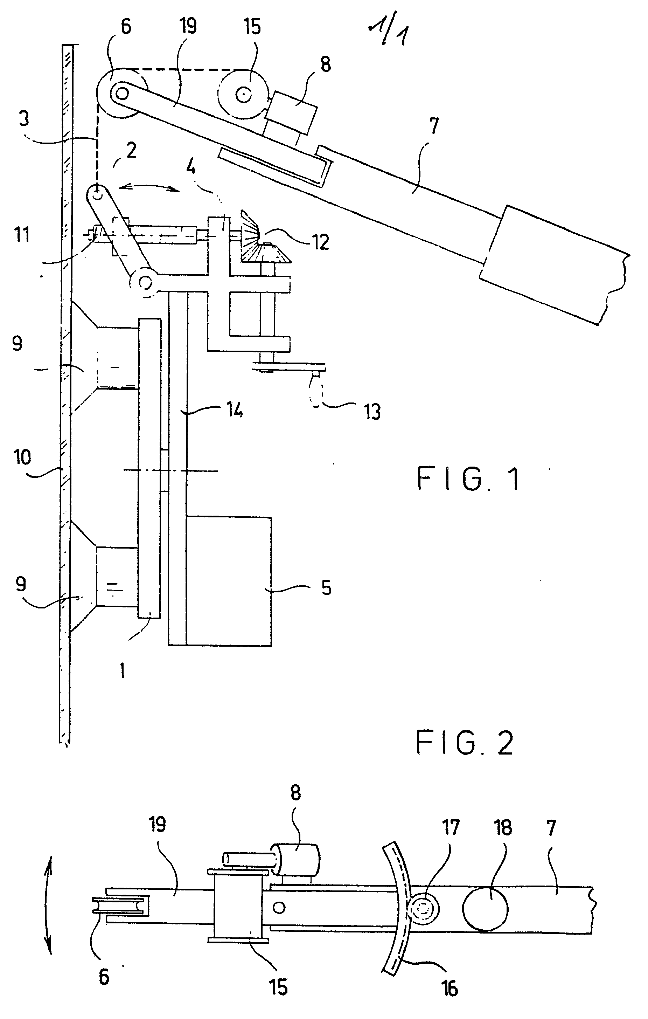

Am Ende des Auslegers 7 ist eine Seilrolle 6 angebracht, über welche das Seil 3 läuft. Das Seil 3 kann von der mit dem Elektromotor 8 angetriebenen Seilwinde 15 gehoben und gesenkt werden. Das Seil 3 ist am Anschlusspunkt 2 einer Kippeinrichtung 4 angeschlossen. An der Kippeinrichtung 4 ist eine Halterung 14 angebracht. Mit Hilfe der Kippeinrichtung 4 kann der Anschlusspunkt 2 des Seils 3 in senkrechter Richtung zur Glasplatte 10 bewegt werden. Die Bewegung kann auf mechanische, elektrische, hydraulische, pneumatische, usw. Weise erfolgen. Bei dem in Fig. 1 gezeigten Ausführungsbeispiel erfolgt die Bewegung durch eine Verstelleinrichtung, die eine Spindel 11 enthält, die über die Kegelräder 12 mit Hilfe einer Handkurbel 13 angetrieben wird. Die Halterung 14, welche die das Vakuum für die Saugköpfe 9 erzeugende Einrichtung 5 trägt, ist derart ausgebildet, dass die die Saugköpfe 9 tragende Vorrichtung drehbar an dieser gelagert ist. Dabei entspricht die Drehrichtungsebene der Saugeinrichtung der Ansaugebene.

Zur Feinbewegung der gemäss Ausführungsbeispiel gehaltenen Glasscheibe 10 ist an dem Ausleger 7 ein Träger 19 angebracht, welcher an dem Ausleger 7 drehbar gelagert ist. Der Träger 19 enthält die Seilrolle 6 und die Seilwinde 15 mit dem Elektromotor 8 (Fig. 2). An dem der Seilrolle 6 entgegengesetzten Ende des Trägers 19 ist eine Zahnstange angebracht, in welche das von dem Elektromotor 18 angetriebene Ritzel 17 eingreift. Auf diese Weise ist der Träger 19 nach links und nach rechts bewegbar. Die Bewegung des Trägers 19 kann ebenfalls auch durch andere bekannte Antriebsarten erfolgen.

Es ist auch denkbar, am freien Ende des Auslegers 7 bzw. des Trägers 19 eine Aufnahmevorrichtung mit einer nach unten geöffneten Aufnahme anzubringen, wobei die Halterung eine nach oben gerichtete Führung aufweist. Mit Hilfe der Seilwinde 15 und des Seils 3 kann die Halterung 14 in die nicht gezeigte Aufnahmevorrichtung hineingezogen und dort festgehalten werden.

Der Träger 19 kann wahlweise durch eine teleskopartige Ausführung so ausgebildet sein, dass er auch unter Last verlängert und verkürzt werden kann.

Die in verschiedenen Positionen feststellbare Drehvorrichtung der Saugeinrichtung 1 hat eine Feinjustierung, die es erlaubt, zusätzlich das exakte waagerechte Ausbalancieren der Scheibe zu ermöglichen, insbesondere wenn die Scheibe beim Ansetzten der Saugeinrichtung nicht genau in der Mitte gefasst wurde.

## Patentansprüche

1. Vorrichtung mit einem feststehenden oder bewegbaren Ausleger (7, 19), von dessen freiem Ende eine auf Zug beanspruchbare Einrichtung (3) zum vertikalen Heben und Senken einer zum Halten von plattenförmigen Körpern (10) in definierter Lage ausgebildeten, an einem Anschlusspunkt (2) aufgehängten Saugeinrichtung (1, 9) herabhängt, mit einer an der Saugeinrichtung (1, 9) angebrachten Kippeinrichtung (4), dadurch gekennzeichnet, dass die Kippeinrichtung (4) mittels einer Verstelleinrichtung (11, 12, 13) stufenlos einstellbar ist und dass durch die Verstelleinrichtung (11, 12, 13) der Anschlusspunkt (2) der Saugeinrichtung (1) bis an die Ansaugebene (an 10) heran oder von ihr weg bewegbar ist, wodurch die Lage des Schwerpunktes der Kombination der Anordnung mit dem plattenförmigen Körper (10) derart veränderbar ist, bis sich der Anschlusspunkt (2) über dem Schwerpunkt befindet und der plattenförmige Körper (10) sich vertikal erstreckt.

2. Vorrichtung nach Anspruch 1, dadurch gekennzeichnet, dass auf der der Ansaugebene entgegengesetzten Seite des Sauggeräts (1) ein Gegengewicht (5) angebracht ist.

3. Vorrichtung nach einem der Ansprüche 1 oder 2, dadurch gekennzeichnet, dass die auf Zug beanspruchbare Einrichtung zum Heben und Senken den äussersten Teil des Auslegers (7) bildet.

4. Vorrichtung nach Anspruch 2 oder 3, dadurch gekennzeichnet, dass das Gegengewicht (5) bewegbar ist.

5. Vorrichtung nach einem der vorhergehenden Ansprüche, dadurch gekennzeichnet, dass der äussere Teil des Auslegers (7, 19) horizontal nach beiden Seiten schwenkbar ist und verlängert als auch verkürzt werden kann.

6. Vorrichtung nach einem des vorhergehenden Ansprüche, dadurch gekennzeichnet, dass das die Saugköpfe (9) tragende Sauggerät (1) an einer die Verstelleinrichtung (4) und das Gegengewicht (5) tragenden Halterung (14) drehbar gelagert ist, wobei die Drehachse senkrecht auf der Ansaugebene steht und in jeder Lage feststellbar ist.

7. Vorrichtung nach einem der vorhergehenden Ansprüche, dadurch gekennzeichnet, dass am freien Ende des Auslegers (7, 19) eine Aufnahmevorrichtung mit einer nach unten geöffneten Aufnahme angebracht ist, dass die Halterung (14) eine nach oben gerichtete Führung aufweist, und das mit Hilfe der Hebevorrichtung (3, 6, 8, 15) die Halterung (14) in die Aufnahmevorrichtung hineinziehbar ist und dort festgehalten wird.

## Revendications

1. Dispositif comprenant un bras-levier (7, 19) fixe ou mobile, à l'extrémité libre duquel pend un mécanisme (3) qui peut être sollicité pour une opération de traction, et qui sert à élever et à abaisser verticalement un mécanisme de succion (1, 9) accroché à un point d'attache (2) et prévu pour tenir dans une position définie des corps (10) en forme de plaque, et un mécanisme de culbutage (4) monté sur le mécanisme de succion (1, 9) caractérisé en ce que le mécanisme de culbutage (4) est réglable sans gradations au moyen d'un mécanisme d'ajustage (11, 12, 13) et que grâce au mécanisme d'ajustage (11, 12, 13) le point d'attache (2) du mécanisme de succion (1) peut être déplacé jusqu'au plan de succion (à 10) ou peut en être éloigné, grâce à quoi la positon du centre de gravité du combiné mécanisme et corps (10) en forme de plaque peut être changée jusqu'à ce que le point d'attache (2) se trouve au-dessus du centre de gravité et que le corps (10) en forme de plaque s'étende verticalement.

2. Dispositif selon la revendication 1, caractérisé en ce que sur la face du mécanisme de succion (1), qui est opposée à la face de succion, est monté un contrepoids (5).

3. Dispositif selon l'une des revendications 1 ou 2, caractérisé en ce que le mécanisme qui peut être sollicité pour une opération de traction, et qui sert à élever et à abaisser, forme la partie la plus extérieure du bras-levier (7).

4. Dispositif selon la revendication 2 ou 3, caractérisé en ce que le contrepoids (5) peut être déplacé.

5. Dispositif selon l'une quelconque des revendications précédentes, caractérisé en ce que la partie extérieure du bras-levier (7, 19) est pivotable horizontalement dans les deux sens et qu'elle peut être allongée ainsi qu'être raccourcie.

6. Dispositif selon l'une quelconque des revendications précédentes, caractérisé en ce que le mécanisme de succion (1) portant les têtes (9) aspirantes, est logé à pivotement dans une fixation (14) qui porte le mécanisme d'ajustage (11) et le contrepoids (5), et où l'axe de rotation est perpendiculaire au plan de succion et peut être calé dans chaque positon.

7. Dispositif selon l'une quelconque des revendications précédentes, caractérisé en ce qu'à l'extrémite libre du bras-levier (7, 19) est monté un dispositif de prise en charge ayant un palier ouvert vers le bas, que la fixation (14) est dotée d'un guide orienté vers le haut, et qu'à l'aide du dispositif de levage (3, 6, 8, 15) la fixation (14) peut être logée dans le dispositif de prise en charge et qu'elle y est maintenue.

**Claims**

1. Device with a fixed or movable arm (7, 19) from whose free end depends an arrangement (3) responsive to traction to raise and lower vertically a suction arrangement (1, 9) for holding plate-formed objects (10) in a defined position, suspended at a connection point (2), with a tilting arrangement (4) fitted to the suction arrangement (1, 9), characterized in that the tilting arrangement (4) is steplessly adjustable by means of an adjusting arrangement (11, 12, 13) and that the connection point (2) of the suction arrangement (1) is movable by the adjusting arrangement (11, 12, 13) towards or away from the suction plane (at 10), whereby the position of the centre of gravity of the combination of the device with the plate-formed object (10) is so adjustable that the connection point (2) lies over the centre of gravity and the plate-formed object (10) extends vertically.

2. Device according to claim 1, characterized in that a counterweight (5) is fitted to the side of the suction apparatus (1) opposite to the suction plane.

3. Device according to claim 1 or 2, characterized in that the arrangement responsive to traction for raising and lowering forms the outermost part of the arm (7).

4. Device according to claim 2 or 3, characterized in that the counterweight (5) is movable.

5. Device according to any one the preceding claims, characterized in that the outer part of the arm (7, 19) is adapted to swing horizontally to both sides and can be extended and also retracted.

6. Device according to any one of the preceding claims, characterized in that the suction apparatus (1) carrying the suction heads (9) is rotatably mounted on a support (14) carring the adjusting arrangement (4) and the counterweight (5), the axis of rotation being perpendicular to the suction plane and fixable in any position.

7. Device according to any one of the preceding claims, characterized in that a receiver device is fitted to the free end of the arm (7, 19) with a downwardly open receiver, that the support (14) has an upwardly directed guide, and that the support (14) can be drawn into the receiver device with the aid of the lifting device (3, 6, 8, 15), and be fixed therein.

1/1

FIG. 1

FIG. 2